# EUROPÄISCHE PATENTSCHRIFT

(11) **EP 0 316 825 B1**
(45) Veröffentlichungstag und Bekanntmachung des Hinweises auf die Patenterteilung: **27.01.1993**
(21) Anmeldenummer: 88118892.4
(22) Anmeldetag: 12.11.1988
(51) Int. Cl.: A01B 15/14

(54) **Pflugrahmen**
Plough frame
Cadre de la charrue

(30) Priorität: 18.11.1987 DE 8715285 U
(43) Veröffentlichungstag der Anmeldung: 24.05.1989
(73) Patentinhaber: H. Niemeyer Söhne GmbH & Co. KG, D-48466 Hörstel (DE)
(72) Erfinder: Barlage, Bruno, Dipl.-Ing., D-4446 Hörstel (DE)
(74) Vertreter: Busse & Busse Patentanwälte

(56) Entgegenhaltungen:
- EP-A- 0 062 734
- EP-A- 0 171 861
- DE-C- 3 322 925
- DE-C- 3 420 670

## Beschreibung

Die Erfindung bezieht sich auf einen Pflugrahmen für Pflüge mit einstellbarer Schnittbreite, insbesondere Drehpflüge, in einer Ausbildung gemäß dem Oberbegriff des Patentanspruchs 1.

Ein bekannter Pflugrahmen dieser Art (EP-A-0 171 861) weist als Durchführungsöffnungen für die Stellglieder einfache Durchbrüche auf, die in ihrem Bereich die Festigkeit des Pflugrahmens herabsetzen.

Der Erfindung liegt die Aufgabe zugrunde, einen Pflugrahmen zu schaffen, der trotz vorhandener Durchführungsöffnungen für die Stellglieder eine hohe, allen Anforderungen des Pflugbetriebes gewachsene Steifigkeit aufweist.

Der Pflugrahmen nach der Erfindung löst diese Aufgabe mit den Merkmalen des Patentanspruchs 1. Hinsichtlich weiterer Ausgestaltungen wird auf die Ansprüche 2-4 verwiesen. Der je Durchführungsöffnung vorgesehene Einsatzteil und der die Mündung jeder Durchführungsöffnung umgebende Tragansatz vermitteln dem Pflugrahmen eine besondere Steifigkeit. Die Tragansätze bilden zugleich eine breite Basis für die Abstützung der die senkrechten Schwenkachsen für die Pflugkörper definierenden Gelenkbolzen. Dies sichert den über die Gelenkbolzen gehaltenen Pflugkörpern eine zuverlässige, allen Belastungen gewachsene Abstützung.

Weitere Einzelheiten und Vorteile ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Draufsicht auf einen Drehpflug mit einem Pflugrahmen gemäß der Erfindung,
- Fig. 2: eine abgebrochene Seitenansicht eines Pflugrahmens in Einzeldarstellung, und
- Fig. 3: einen Schnitt etwa nach der Linie III-III in Fig. 1

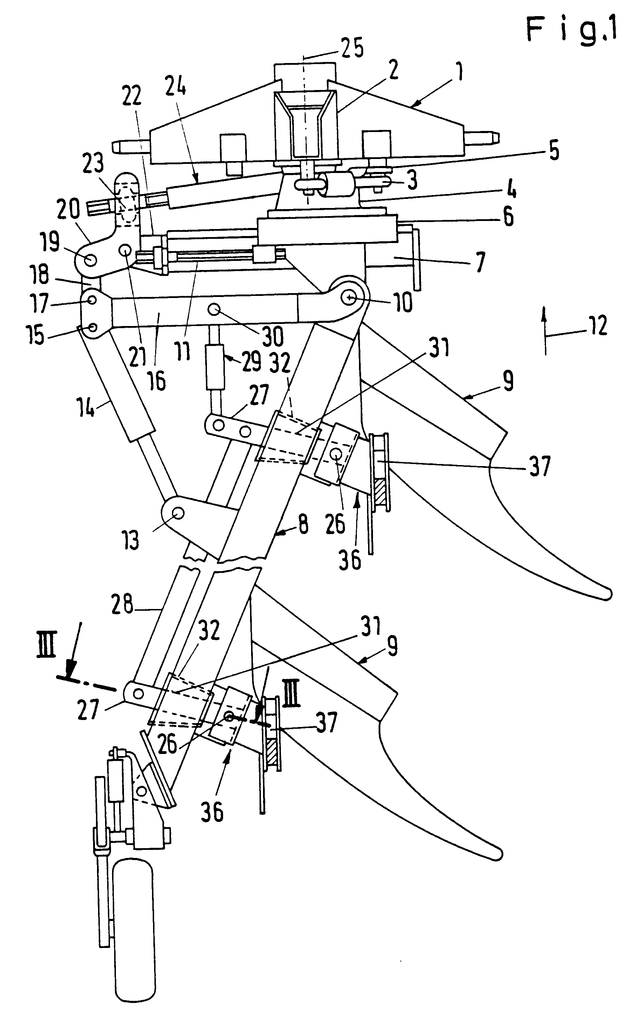

Der in Fig. 1 veranschaulichte Pflug ist als Drehpflug ausgebildet, jedoch kann in Verbindung mit einem Pflugrahmen erfindungsgemäßer Art grundsätzlich auch eine andere Pflugausführung, z. B. ein Beetpflug, zur Anwendung kommen. Der veranschaulichte Drehpflug umfaßt im einzelnen ein mit der Dreipunkthydraulik eines landwirtschaftlichen Zugfahrzeugs verbindbares Anbaugestell 1, eine in einem Lager 2 des Anbaugestells 1 schwenkbar gelagerte und mittels einer Antriebsvorrichtung 3, insbesondere einem Hydraulikzylinder, aus einer ersten Arbeitsstellung um etwa 180° in eine zweite Arbeitsstellung drehbare Wendewelle 4, deren mit der Antriebsvorrichtung verbundener Schwenkhebel mit 5 bezeichnet ist, eine mit der Wendewelle 4 verbundene Kulisse 6, die in den Arbeitsstellungen des Drehpfluges eine horizontale Querführung für ein Schiebestück 7 bildet, und einen Pflugrahmen 8, der eine Anzahl, z. B. drei oder vier, Pflugkörper 9 abstützt und an seinem vorderen Ende mit dem Schiebestück 7 um eine in den Arbeitsstellungen des Pflugrahmens 8 etwa lotrechte Gelenkachse 10 schwenkbar verbunden ist. Das Schiebestück 7 ist in der Kulisse 6 mittels einer Stellvorrichtung 11, z. B. einer Schraubstellspindel, quer zur Zugrichtung 12 horizontal verschieb- und feststellbar, um die Arbeitsstellung des ersten Pflugkörpers 9 an das jeweils benutzte Zugfahrzeug anpassen zu können.

Der Pflugrahmen 8 ist an einem Anschlußpunkt 13 mit einer Stellstrebe 14 verbunden, die bei 15 gelenkig an dem freien Ende eines Zwischenhebels 16 angreift, der um die Gelenkachse 10 schwenkbar am Schiebestück 7 angelenkt ist. Bei 17 greift am freien Ende des Zwischenhebels 16 ein Zwischenlenker 18 an, der bei 19 an dem ersten freien Ende eines als Winkelhebel ausgebildeten Doppelhebels 20 angreift. Dieser bei 21 schwenkbar an einem Ansatzteil 22 der Kulisse 6 schwenkbar angelenkte Doppelhebel 20 ist bei 23 gelenkig mit einer Stellstange 24 verbunden, die mit ihrem anderen Ende gelenkig an einem in Fig. 1 nicht sichtbaren, im Abstand vertikal unter der Mittelachse 25 der Wendewelle 4 angeordneten Anschlußpunkt am Anbaugestell 1 gelenkig angreift. Die Pflugkörper 9 sind jeweils um in der Arbeitsstellung des Pflugrahmens 8 im wesentlichen senkrechte Schwenkachsen 26 schwenkbar am Pflugrahmen 8 abgestützt und über Stellglieder 27 verschwenk-und feststellbar, deren gleichseitigen Enden untereinander durch eine Stellstange 28 verbunden sind. Am vordersten Stellglied 27 bzw. an der Stellstange 28 greift eine Stellvorrichtung 29, z. B. ein Spannschloß, an, die ihrerseits bei 30 am Zwischenhebel 16 abgestützt ist.

Wie der Zeichnung ohne weiteres entnommen werden kann, kann dem Pflugrahmen 8 eine Grundausrichtung zum Schiebestück 7 vorgegeben werden, wie sie mit Rücksicht auf die Stellung des Schiebestücks 7 in der Kulisse 6 bzw. die Schnittbreiteneinstellung erwünscht ist. Diese Grundausrichtung ist dabei unabhängig von einer Verschwenkung des Pflugrahmens 8 um die Gelenkachse 10, die über die Teile 14, 16, 18, 20 und 24 auf mechanischem Wege in Abhängigkeit von der Betätigung der Antriebsvorrichtung 3 bei Drehbewegungen vollzogen wird.

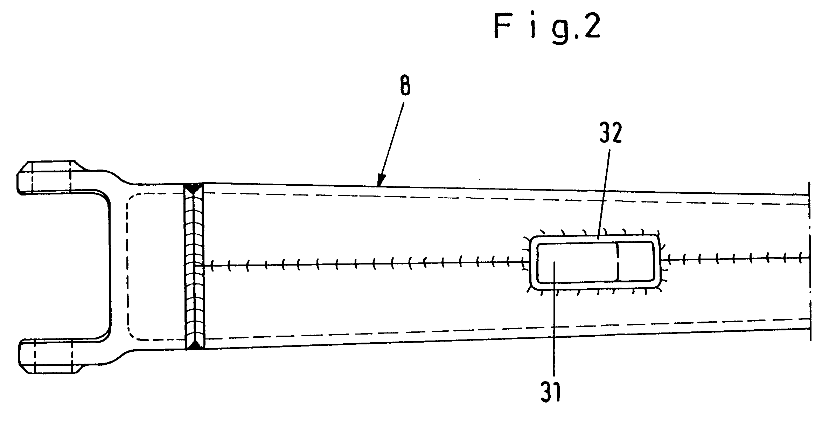

Jeweils in den Anschlußbereichen für die Pflugkörper 9 ist der Pflugrahmen 8 mit in Arbeitsstellung annähernd horizontal ausgerichteten Durchführungsöffnungen 31 versehen, die, wie der Fig. 2 entnommen werden kann, eine mittige Höhenlage im Pflugrahmen 8 aufweisen. Die Durchführungsöffnungen sind dabei von einem in den Pflugrahmen 8 eingesetzten Einsatzteil 32 umgeben, der in den Pflugrahmen 8 eingeschweißt ist und dadurch zugleich eine Rahmenaussteifung bildet. Die Durchführungsöffnungen 31 weisen, wie der Zeichnung entnommen werden kann, einen horizontalen Querschnitt auf, der sich zu der von den Pflugkörpern 9 abgewandten und der Stellstange 28 zugewandten Seite des Pflugrahmens 8 hin erweitert, um eine ausreichende Bewegungsmöglichkeit für die Stellglieder 27 zu schaffen.

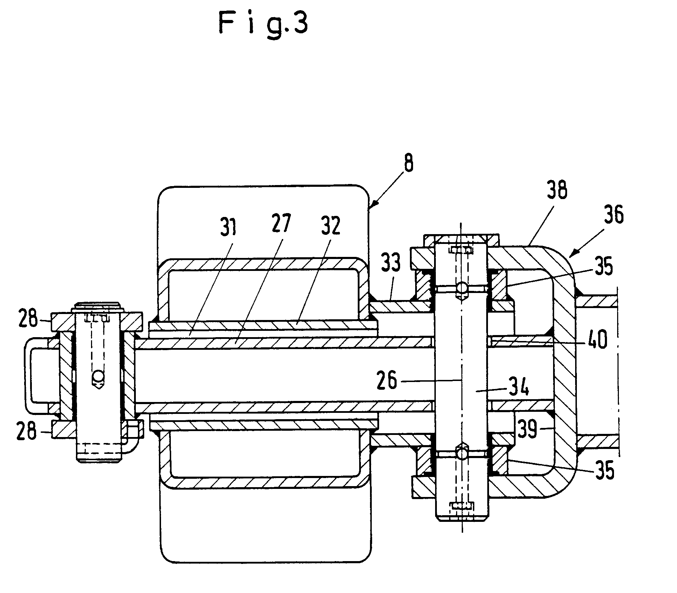

Wie insbesondere der Fig. 3 näher entnommen werden kann, ist der Pflugrahmen 8 auf seiner Pflugkörperseite (rechts in Fig. 3) mit einem die Mündung der Durchführungsöffnungen 31 jeweils umgebenden Tragansatz 33 versehen, der von einem Abschnitt eines Kastenprofils gebildet und auf seiner einen Seite mit dem Pflugrahmen 8 verschweißt ist. Der Tragansatz 33 weist eine in Arbeitsstellung des Pflugrahmens 8 annähernd vertikale, die Schwenkachse 26 für den zugehörigen Pflugkörper 9 umgebende Durchführungsbohrung für einen die Schwenkachse 26 definierenden Gelenkbolzen 34 auf, an die sich an der Ober- und der Unterseite des Tragansatzes 33 jeweils ein Lagerauge 35 anschließt.

Ein dem Pflugkörper 9 jeweils zugeordnetes Anschlußteil 36, das zur Festlegung der Pfluggrindel 37 bestimmt ist, umfaßt eine den Tragansatz 33 und den Gelenkbolzen 34 umgreifende Verbindungstasche 38, die durch den Gelenkbolzen 34 festgelegt ist und sich an den Stirnflächen der Lageraugen 35 abstützt. Am Taschengrund 39 ist ein sich durch die Durchführungsöffnung 31 hindurcherstreckender Hohlprofilteil als Stellglied 27 befestigt, der eine (im Grundriß) schlitzförmige Durchgangsöffnung 40 in seiner oberen und unteren Profilwandung aufweist, durch die sich der das Stellglied 27 durchsetzende Gelenkbolzen 34 hindurcherstreckt. Die Durchgangsöffnung 40 ermöglicht Schwenkbewegungen des Stellgliedes in einer in Fig. 3 zur Zeichenebene senkrechten Ebene in dem durch die Schnittbreitenverstellung vorgegebenen Ausmaße.

## Patentansprüche

1. Pflugrahmen für Pflüge mit einstellbarer Schnittbreite, insbesondere Drehpflüge, mit Pflugkörpern (9), die mittels Stellgliedern (27) um in Arbeitsstellung des Pflugrahmens (8) etwa senkrechte Schwenkachsen (26) schwenkbar und in unterschiedlichen Schwenkstellungen feststellbar am Pflugrahmen abgestützt sind, wobei in den Anschlußbereichen für die Pflugkörper (9) der Pflugrahmen (8) mit in Arbeitsstellung annähernd horizontal ausgerichteten Durchführungsöffnungen (31) für die Stellglieder (27) versehen ist, **dadurch gekennzeichnet,** daß die Durchführungsöffnungen (31) jeweils von einem in den Pflugrahmen (8) eingesetzten Einsatzteil umgrenzt sind, das in den Pflugrahmen (8) eingeschweißt ist, und daß der Pflugrahmen auf seiner Pflugkörperseite mit einem die Mündung der Durchführungsöffnungen (31) jeweils umgebenden Tragansatz (33) für die Abstützung eines die Schwenkachse (26) für den zugehörigen Pflugkörper (9) definierenden Gelenkbolzens (34) versehen ist.

2. Pflugrahmen nach Anspruch 1, **dadurch gekennzeichnet,** daß die Durchführungsöffnungen (31) eine mittige Höhenlage im Pflugrahmen (8) aufweisen.

3. Pflugrahmen nach Anspruch 1 oder 2, **dadurch gekennzeichnet,** daß die Durchführungsöffnungen (31) sich im horizontalen Querschnitt zu der den Pflugkörpern (9) abgewandten Seite des Pflugrahmens (8) hin erweitern.

4. Pflugrahmen nach einem der Ansprüche 1 bis 3, **dadurch gekennzeichnet,** daß ein dem Pflugkörper (9) zugeordnetes Anschlußteil (36) eine den Tragansatz (33) und den Gelenkbolzen (34) umgreifende Verbindungstasche (38) aufweist, an deren Taschengrund (39) ein sich durch die Durchgangsöffnung (31) hindurcherstreckender Hohlprofilteil als Stellglied (27) befestigt ist, das eine schlitzförmige Durchgangsöffnung (40) für den Gelenkbolzen (34) aufweist.

## Claims

1. A plough frame for ploughs with an adjustable width of cut, particularly rotary ploughs, with ploughshares (9) which, by means of positioning members (27) are pivotable about axes (26) which are substantially vertical when the plough frame (8) is in the working position and which can be lockably supported on the plough frame in different pivoted positions, whereby in the places where the ploughshares (9) are connected, the plough frame (8) is provided with apertures (31) for the positioning members (27) and which are aligned virtually horizontally in the working position, characterised in that the apertures (31) are in each case bounded by an insert part which is fitted into the plough frame (8) and which is welded into the plough frame (8) and in that on the ploughshare side, the plough frame is provided with a supporting attachment (33) surrounding the apertures (31) and intended to support a hinge pin (34) defining the pivot axis (26) of the associated ploughshare (9).

2. A plough frame according to Claim 1, characterised in that the apertures (31) have a central vertical position in the plough frame (8).

3. A plough frame according to Claim 1 or 2, characterised in that in horizontal cross-section the apertures (31) widen out towards that side of the plough frame (8) which is remote from the ploughshares (9).

4. A plough frame according to one of Claims 1 to 3, characterised in that a connection part (36) associated with the ploughshare (9) has engaging around the supporting attachment (33) and the hinge pin (34) a connecting pocket (38), in the bottom (39) of which there is extending through the aperture (31) a hollow profile member which serves as a positioning member (27) and which has a slot-shaped aperture (40) for the hinge pin (34).

## Revendications

1. Cadre de charrue avec une voie réglable, en particulier pour charrues brabant, avec des corps de charrue (9), qui sur le cadre de la charrue sont montés de façon à pouvoir pivoter au moyen d'organes de réglage (27) autour d'axes de pivotement (26) sensiblement verticaux dans la position de travail du cadre de la charrue (8) et peuvent être fixés dans différentes positions de pivotement, cadre dans lequel le cadre de la charrue (8) dans les zones d'accrochage des corps de charrue (9) est pourvu d'ouvertures de traversée (31) orientées à peu près horizontalement en position de travail pour les organes de réglage (27), cadre caractérisé en ce que les ouvertures de traversée (31) sont délimitées par une pièce rapportée insérée dans le cadre de la charrue (8), pièce qui est soudée dans le cadre de la charrue (8) et en ce que le cadre de la charrue est pourvu, sur le côté de son corps de charrue, d'un appendice de support (33) entourant l'embouchure des ouvertures de traversée (31) pour le montage d'un axe d'articulation (34) définissant l'axe de pivotement (26) du corps de charrue (9) correspondant.

2. Cadre de charrue selon la revendication 1, caractérisé en ce que les ouvertures de traversée (31) forment une élévation médiane dans le cadre de la charrue.

3. Cadre de charrue selon la revendication 1 ou 2, caractérisé en ce que les ouvertures de traversée (31) s'étendent en coupe transversale horizontale vers le côté, tourné à l'opposé des corps de charrue (9) du cadre de charrue (8).

4. Cadre de charrue selon l'une des revendications 1 à 3, caractérisé en ce qu'une pièce de raccordement (36) associée au corps de charrue (9) présente une poche de liaison (38) englobant l'appendice de support (33) et l'axe d'articulation (34), poche sur le fond (39) de laquelle est fixée une pièce profilée creuse servant d'organe de réglage passant à travers l'ouverture de traversée (31), pièce qui présente une ouverture de traversée (40) en forme de fente pour l'axe d'articulation (34).
